# EUROPÄISCHE PATENTANMELDUNG

(11) **EP 1 855 193 A1**
(43) Veröffentlichungstag der Anmeldung: **14.11.2007**
(21) Anmeldenummer: 06009771.4
(22) Anmeldetag: 11.05.2006
(51) Int. Cl.: G06F 9/44

(54) **System und Verfahren zur Unterstützung einer Benutzeroberfläche**

(71) Anmelder: SIEMENS AKTIENGESELLSCHAFT, 80333 München (DE)
(72) Erfinder: Richardt, Dirk, 91052 Erlangen (DE)

(57) **Zusammenfassung**

Die Erfindung betrifft ein System mit Anzeigemitteln (1) zur Darstellung einer grafischen Benutzeroberfläche (2) und ein Verfahren zur Unterstützung einer grafischen Benutzeroberfläche (2), wobei zumindest ein Objekt (3, 6) auf der Benutzeroberfläche (2) zum Aufruf einer Funktion vorgesehen ist. Um dem Benutzer, insbesondere Anfänger, das System oder die Benutzeroberfläche (2) leicht erlernen und steuern zu können, wird eine Information (7) ) bei einer Auswahl des Objekts (3) derartig bereitgestellt, dass die Information (7) über die Gründe der Unverfügbarkeit des Objekts (3) und/oder die Möglichkeit zum Aufruf der Funktion informiert.

## Beschreibung

Die Erfindung betrifft ein System mit Anzeigemitteln zum Anzeigen einer grafischen Benutzeroberfläche bzw. ein Verfahren zur Unterstützung einer grafischen Benutzeroberfläche, wobei zumindest ein Objekt, durch das eine Funktion aufrufbar ist, auf der Benutzeroberfläche vorgesehen ist.

Eine Benutzeroberfläche stellt in der Regel eine Mensch-Maschine Schnittstelle dar, über die ein Benutzer mit einem Daten verarbeitenden elektrischen System, z.B. einem Computer, kommunizieren kann. Bei einer grafischen Benutzeroberfläche - auch objektorientierte Benutzeroberfläche genannt - werden Interaktionen über Objektmanipulationen durch entsprechende Befehle ausgeführt. Dies geschieht meistens mittels eines Steuergeräts (Maus oder Tastatur usw.), mit dem die grafischen Objekte bedient oder ausgewählt werden. Ein typisches Beispiel dafür, ist das Betriebssystem Windows.

Bei einer grafischen Benutzeroberfläche stehen bestimmte Funktionen nur zur Verfügung, wenn entsprechende Objekte im Menü/Kontextmenü oder auf der Symbolleiste (Toolbar) ausgewählt wurden. Andernfalls, wenn die Funktion nicht angeboten oder "disabled" ist, wird das entsprechende Objekt gewöhnlich grau dargestellt. Wenn der Benutzer nicht weiß, warum das Objekt für die Selektion nicht geeignet ist, hat er auch keine Möglichkeit, Hilfsinformationen zu erhalten. Eine derartige Benutzeroberfläche ist wenig komfortabel und benötigt eine lange Einarbeitungszeit, da ein anderer Befehl oder ein geeignetes Objekt nachgeschlagen werden muss. Benutzern - vor allem Anfängern - ist das Prinzip der objektorientierten Interaktion nicht für alle Funktionen bekannt.

Der Erfindung liegt die Aufgabe zugrunde, eine grafische Benutzeroberfläche zu ermöglichen, die für Benutzer, insbesondere für Anfänger, leicht zu erlernen und zu benutzen ist.

Diese Aufgabe wird erfindungsgemäß durch ein System mit den Merkmalen des Patentanspruchs 1 bzw. durch ein Verfahren mit den Merkmalen des Patentanspruchs 5 gelöst. Die abhängigen Ansprüche betreffen vorteilhafte Weiterbildungen und Ausgestaltungen des Systems bzw. des Verfahrens.

Der Erfindung liegt die Idee zugrunde, Benutzern eine Hilfsinformation bei einer Schwierigkeit oder einem Hindernis eines Funktionsaufrufs anzubieten. Dafür wird ein System mit Anzeigemitteln zur Darstellung einer grafischen Benutzeroberfläche, wobei zumindest ein Objekt, insbesondere ein Menüeintrag, zum Aufruf einer Funktion auf der Benutzeroberfläche vorgesehen ist. Weitere Objekte können Schaltflächen (Buttons), Toolbars (Werkzeugleisten), Schieberegler, Auswahllisten und Symbole sein. Durch eine Wahl des Objekts kann die Funktion aufgerufen werden. Diese Benutzeroberfläche ist zur Auswahl des Objekts für einen Benutzer navigierbar, wobei die aktuelle Position der Navigation, beispielsweise durch einen Cursor, auf der Benutzeroberfläche dargestellt wird. Das Objekt ist gegebenenfalls in einer Situation für den Aufruf der Funktion aktuell nicht verfügbar. Daher wird eine Information für das aktuell für den Aufruf der Funktion nicht verfügbare Objekt bei der Auswahl dieses Objekts derartig bereitgestellt, dass die Information über die Gründe der Unverfügbarkeit des Objekts und/oder die Möglichkeit zum Aufruf der Funktion informiert. Dem Benutzer kann erklärt werden, warum dieses Objekt zurzeit für den Aufruf der Funktion nicht verfügbar ist und wie das Objekt aktiviert werden kann.

Die mit der Erfindung erzielten Vorteile bestehen insbesondere darin, dass eine einfachere Bedienung oder Verwendung eines Systems vor allem für Anfänger bzw. Umsteiger und dadurch geringere Einstiegshürden bzw. eine einfachere Einarbeitung ermöglicht wird. Allerdings, wie bei gewöhnlichen grafischen Benutzeroberflächen kann eine Funktion sofort bzw. unmittelbar danach ausgeführt werden, wenn man das für den Aufruf der Funktion aktivierte Objekt gewählt hat.

Vorteilhafterweise kann die Dauer einer Erreichung der Navigation auf das Objekt festgestellt werden. Somit ist die Information in einer Form von Tooltipp, die auch Quickinfo, Kurzinfo genannt, darstellbar. Wenn ein Benutzer mit einer Computermaus auf dem Objekt verharrt, wird über einen Tooltipp die bereitgestellte Information automatisch eingeblendet. Zudem kann diese Information auch in einem neu gezeigten Fenster extra erscheinen. Die Bereitstellung bzw. die Anzeige der Information kann vor oder ohne eine Ausführung der Funktion geschehen, dadurch ist eine synchrone Rückmeldung für den Benutzer beim Navigieren auf der Benutzeroberfläche möglich und eine eventuelle Störung im System infolge der Funktionsausführung kann vermieden werden.

Um eine intuitive Rückmeldung einem Benutzer zu ermöglichen, wird die Information grafisch und/oder akustisch dargestellt. Das ist für die Benutzer hilfreich, da das System leicht und intuitiv zu erlernen ist.

Vorteilhafterweise wird ein aktuell unverfügbares Objekt und ein aktuell verfügbares Objekt miteinander unterschiedlich dargestellt. Damit kann man sofort erkennen, welches Objekt bzw. welche dem Objekt entsprechende Funktion verfügbar ist. Er kann sich dann an den Gegebenheiten noch vor dem Funktionsaufruf beim Objekt orientieren, d.h. die Einarbeitungszeit kann gespart werden.

Außer dem oben geschilderten System betrifft die Erfindung weiterhin ein Verfahren, welches zur Erfüllung der gleichen Aufgabe ausführbar ist.

Nachfolgend wird die Erfindung anhand der in den Figuren dargestellten Ausführungsbeispiele näher beschrieben und erläutert.

Es zeigen:
- FIG 1: ein Beispiel einer Benutzeroberfläche in einem herkömmlichen System,
- FIG 2: ein Beispiel einer Benutzeroberfläche in einem erfindungsgemäßen System.

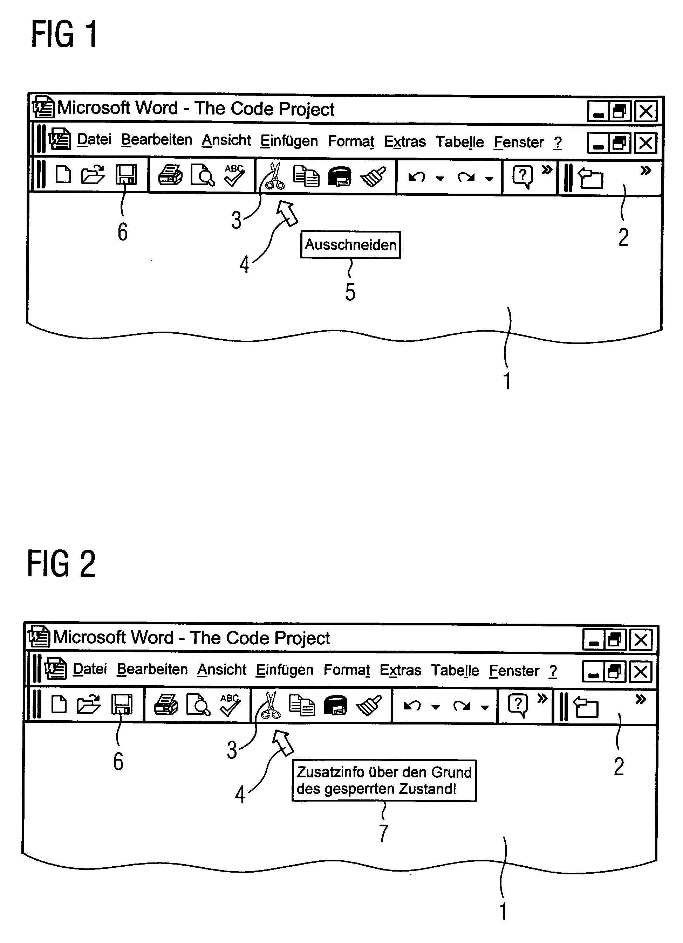

FIG 1 zeigt, dass ein Benutzer in einer Benutzeroberfläche 2, z.B. eine Ausschneidensfunktion, aufruft, wobei die Benutzeroberfläche 2 auf einer Anzeige (Monitor) 1 dargestellt wird. Auf dieser Benutzeroberfläche 2 entstehen mehreren Menüeinträge. Mit einer Computermaus kann der Benutzer zwischen dem einzelnen der Menüeinträge navigieren. Hierbei lassen sich alle Menüeinträge zudem jeweils mit einem Tooltipp 5 versehen, die beim Überfahren mit dem Mauscursor 4 auf jeden Eintrag auftaucht. Solche Menüeinträge stehen dem Benutzer aber nicht immer zur Verfügung, d.h. sie können ausgewählt oder nicht ausgewählt werden. Dabei sind die auswählbaren und die nicht auswählbaren Menüeinträge sich einander zu unterscheiden. In diesem Beispiel wird ein Menüeintrag 3 (Ausschneiden) durch eine Darstellung in Grau im Gegensatz zur schwarzen Darstellung der auswählbaren Menüeinträge 6 (Speichern) als nicht auswählbar gekennzeichnet ist. Wird der verfügbare Eintrag 6 gewählt, wird die entsprechende Funktion (hier Speichern) sofort bzw. unmittelbar, d.h. ohne weitere Bedienschritte ausgeführt. Der für die Ausschneidensfunktion zuständige Eintrag 3 steht dahingegen aktuell dem Benutzer nicht zur Verfügung, Da der Tooltipp 5 in diesem Fall nur über den Namen der aufzurufenden Funktion (Ausschneiden oder Cut) oder des Eintrags 3 informiert, gibt es keine Möglichkeit für den Benutzer, eine Hilfestellung zu bekommen, z.B. ob oder warum die Selektion des Objekts für diese Funktion nicht geeignet ist.

Ein Beispiel für ein erfindungsgemäßes System mit einer grafischen Benutzeroberfläche 2 wird in FIG 2 gezeigt und im Folgenden angegeben, wobei die gleiche Funktion, Ausschneiden, aufzurufen ist. In diesem Fall wird dem Benutzer eine Information 7 für den Eintrag 3 hinsichtlich der aktuellen Situation angezeigt. Aus der Information 7 ergeben sich Gründe dafür, warum der Eintrag 3 aktuell nicht verfügbar ist, oder Hinweise darauf, wie man die dem Eintrag 3 entsprechende Funktion aufrufen kann. Dies ist für den Benutzer hilfreich, um in weiteren Schritten die Ausschneidensfunktion auszuführen.

Als Beispiel kann die Information 7 den Benutzer so informieren, dass der Menüeintrag 3 zurzeit nicht aktiv ist. Alternative kann diese Information 7 dem Benutzer ein Hinweis darauf geben, dass vor der Ausführung dieser Funktion ein konkretes Objekt gewählt oder ein Gegenstand markiert werden muss.

## Patentansprüche

1. System mit Anzeigemitteln (1) zur Darstellung einer grafischen Benutzeroberfläche (2), wobei zumindest ein Objekt (3, 6) auf der Benutzeroberfläche (2) zum Aufruf einer Funktion vorgesehen ist, wobei die grafische Benutzeroberfläche (2) zur Auswahl des Objekts (3, 6) für einen Benutzer navigierbar ist, und wobei für ein aktuell für den Aufruf der Funktion nicht verfügbares Objekt (3) eine Information (7) bei der Auswahl dieses Objekts (3) derartig bereitstellbar ist, dass die Information (7) über die Gründe der Unverfügbarkeit des Objekts (3) und/oder die Möglichkeit zum Aufruf der Funktion informiert.

2. System nach Anspruch 1,
**dadurch gekennzeichnet , dass**
die Dauer einer Erreichung der Navigation auf das Objekt (3, 6) feststellbar ist.

3. System nach Anspruch 1 oder 2,
**dadurch gekennzeichnet , dass**
die Information (7) grafisch und/oder akustisch darstellbar ist.

4. System nach einem der Ansprüche 1 bis 3,
**dadurch gekennzeichnet , dass**
ein aktuell unverfügbares Objekt (3) und ein aktuell verfügbares Objekt (6) unterschiedlich darstellbar sind.

5. Verfahren zur Unterstützung einer grafischen Benutzeroberfläche (2), wobei zumindest ein Objekt (3, 6) auf der Benutzeroberfläche (2) zum Aufruf einer Funktion vorgesehen wird, wobei die grafische Benutzeroberfläche (2) zur Auswahl des Objekts (3, 6) navigiert wird, und wobei für ein aktuell für den Aufruf der Funktion nicht verfügbares Objekt (3) eine Information (7) bei der Auswahl des Objekts (3) derartig bereitgestellt wird, dass durch diese Information (7) die Gründe der Unverfügbarkeit des Objekts (3) und/oder die Möglichkeit zum Aufruf der Funktion angegeben werden.

6. Verfahren nach Anspruch 5,
**dadurch gekennzeichnet , dass**
die Dauer einer Erreichung der Navigation auf das Objekt (3, 6) festgestellt wird.

7. Verfahren nach einem der Ansprüche 5 oder 6,
**dadurch gekennzeichnet , dass**
die Information (7) grafisch und/oder akustisch dargestellt wird.

8. Verfahren nach einem der Ansprüche 5 bis 7,
**dadurch gekennzeichnet , dass**
ein aktuell unverfügbares Objekt (3) und ein aktuell verfügbares Objekt (6) unterschiedlich dargestellt werden.
